(19)

Europäisches
Patentamt
European
Patent Office
Office européen
des brevets

(11) **EP 3 943 666 A1**

(12) **EUROPEAN PATENT APPLICATION**
published in accordance with Art. 153(4) EPC

(43) Date of publication:
**26.01.2022 Bulletin 2022/04**

(21) Application number: **19919807.8**

(22) Date of filing: **18.03.2019**

(51) International Patent Classification (IPC):
*E02D 27/06* (2006.01)      *E02D 23/02* (2006.01)
*E02D 23/08* (2006.01)

(52) Cooperative Patent Classification (CPC):
**E02D 23/02; E02D 23/08; E02D 27/06;** Y02B 10/30

(86) International application number:
**PCT/ES2019/070175**

(87) International publication number:
**WO 2020/188127 (24.09.2020 Gazette 2020/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beridi Maritime S.L.
28049 Madrid (ES)**

(72) Inventor: **COBIÁN, Ignacio
28034 Madrid (ES)**

(74) Representative: **Balder IP Law, S.L.
Paseo de la Castellana 93
5ª planta
28046 Madrid (ES)**

(54) **METHOD FOR THE INSTALLATION OF AN OFFSHORE MARITIME STRUCTURE AND OFFSHORE MARITIME STRUCTURE**

(57)      A method for the offshore installation of a construction laid by gravity on the seabed, comprising: the provision of a concrete base (1) delimited by a lower slab (8), a roof (2) and a perimeter wall (5), the interior whereof comprises vertical walls (6, 6') forming cells (7, 12, 22); connecting at the periphery of the roof (2) a plurality of hollow metal floats (3) formed by a column with a circular or polygonal base; towing the assembly to the offshore location where the construction is to operate; allowing seawater to enter the cells (12) located below the roof (2), maintaining the cells (22) located below the metal floats (3) empty, in such a way that when the cells (12) located below the roof (2) are totally full, both the base and the metal floats (3) are submerged; once the cells located below the roof (2), but not those located below the metal floats (3) are full of water, allowing water to enter the cells (22) located below the metal floats (3) in such a way that the immersion of the assembly is completed, the base thereof resting on the seabed; and removing the metal floats. A gravity-based structure comprising a concrete base (1) and a plurality of hollow metal floats (3) connectable thereto.

FIG. 9

## Description

## FIELD OF THE INVENTION

The present invention belongs to the field of marine structures for laying constructions and installations by gravity in the marine environment. More specifically, the present invention relates to methods for transferring, installing, lowering and refloating marine structures for laying by gravity.

## BACKGROUND OF THE INVENTION

The global importance of developing offshore wind energy is undeniable given its alignment with the global objectives of renewable energy production and the gradual reduction of polluting energies. The offshore deployment of wind turbines to obtain wind energy requires the prior or simultaneous installation of the corresponding structures that support them, which in turn must be properly laid down or lowered to the seabed.

Normally, the foundations for structures resting on the seabed, such as wind turbines, research or drilling platforms or other elements for obtaining marine energy, either rest directly on the seabed by gravity or are fixed to the seabed by means of monopiles, tripods or jackets. Gravity-Based Structures (GBS) are support structures that remain fixed in their placement site thanks to their own weight. They are generally made of steel-reinforced concrete. They usually include cells or empty spaces therein which enable flotation to be controlled until its installation site. Traditionally, structures resting on the seabed by gravity have only been used at shallow depths (i.e., down to depths of about 20 metres). At greater depths, monopile solutions have usually been used, although doing so at the limit of their possibilities, and tripods or jackets have usually been used for depths of up to 50 metres. The deployment thereof, however, presents several drawbacks since their installation requires heavy lift vessels (special vessels with high load capacity cranes), which are even larger than those used at shallower depths, making them more expensive and, worse still, fewer in number. Furthermore, due to the depth at which the process of connecting the piles with the jacket must be carried out, the execution and supervision of this process poses an enormous challenge.

Currently, with the increased power of wind turbines and the greater depths at which they are to be laid, there is a tendency to use gravity-based bases at intermediate depths, approximately 30-60 m, given the reduced cost of installation and maintenance and the greater durability thereof. For example, international patent application WO2016/042173A1 discloses a maritime structure for laying by gravity for the installation of wind turbines and meteorological towers, based on a self-floating concrete caisson the inside of which is divided into cells. It is closed by an upper slab. In one of the cells, a node is arranged, concreted together with the upper slab, and which includes connecting elements of a shaft or structure to the caisson. Likewise, international patent application WO2018/150063A1 discloses a maritime structure for laying constructions, installations or wind turbines by gravity, formed by a triangular-shaped base, caisson or plinth and three columns arranged at the vertices of the base. The inside of the base is divided into hollow cells. This structure enables the completely installed wind turbine to be transported. The lowering process of the structure is carried out by using gravity to ballast the cells with seawater.

In turn, Spanish patent application ES2378960A1 discloses a method for the installation of an offshore substructure, wherein a foundation is dry manufactured, the inside of which is divided into hollow cells and one or more sections of a shaft, and the previous elements are joined in such a way that they take on the relative position thereof envisaged in the installed condition. The assembly is then moved in a self-floating manner to the installation site, transporting overlapping sections on the surface thereof for the final installation thereof at the destination site; and the cells of the foundation are filled with ballast so that it sinks until resting on the seabed. The final assembly of the shaft is carried out after the previous assembly is lowered. However, the naval stability of the structure is greatly compromised during transport and lowering. Therefore, to lower it, auxiliary floating structures are needed which remain on the surface and which are joined to the portion to be submerged, for example by means of hinged bars.

French patent application FR2887900A1 discloses another exemplary method for the construction and installation of a gravity-based structure for supporting a wind energy installation, intended to rest on the seabed. As in the case of ES2378960A1, the base and a first column section are dry built. Next, several, removable, floating caissons are fixed to the base. The base is loaded with solid ballast and the rest of the wind installation is installed. The assembly is then transferred by flotation to the final installation site, where the structure is submerged, by ballasting the floating caissons, until it rests on the seabed. Supplementary ballast (seawater) can be added to the base. The structure is fixed to the seabed by means of anchoring. Finally, divers must disconnect the floating caissons in order to empty them by pumping and make them float for the recovery and later reuse thereof. A notable drawback of this installation process is that due to the great height of the floating caissons, which protrude considerably during towing and are flush with the sea surface once the structure rests on the seabed, the structure has a high weight, which in turn significantly raises the centre of gravity of the assembly and, therefore, decreases naval stability in towing. Therefore, the application thereof at depths greater than 20-30 metres is unfeasible, since it would require floating caissons with excessive weight. In addition, when the structure reaches the seabed, the base has not been completely filled with water, so it has to withstand extremely high pressures, which further restricts the depth limit at which it can be installed. Moreover, for the ballasting of the structure, the floating caissons must be filled with seawater. This complicates the ballasting manoeuvre, since the immersion must be controlled with great precision due to the fact that the filling of the floating caissons must be well-balanced.

## DESCRIPTION OF THE INVENTION

The present disclosure provides a new method for the offshore installation of a maritime gravity-based structure, a new method for refloating the maritime gravity-based structure and a new maritime gravity-based structure, which aim to solve the drawbacks of the methods and structures described in the state of the art.

In this disclosure, the term "construction" is used to refer to any installation or construction, such as wind turbines, jackets, monopiles, substations, energy prospecting structures, platforms, meteorological towers, etc., that may be installed or deployed offshore.

Likewise, when an installation method is referred to in this specification, the method may include manufacturing and transfer steps, in addition to installation or deployment, including lowering, of said elements offshore.

In a first aspect of the invention, a method for the offshore installation of a construction laid by gravity on the seabed is provided, comprising:

   the provision of a concrete base delimited by a lower surface or slab, an upper surface or roof and a perimeter wall, wherein the interior of the concrete base comprises a plurality of vertical walls forming cells,
   connecting at the periphery of the roof of said concrete base a plurality of hollow metal floats, wherein each metal float of said plurality of metal floats is formed by a column with a circular or polygonal base,
   towing the assembly formed by the concrete base and the plurality of metal floats to the offshore location where it is to operate,
   allowing seawater to enter the cells of the concrete base located below the roof of the concrete base, maintaining the cells located below the metal floats empty, in such a way that when the cells located below the roof are totally full, both the concrete base and the metal floats are submerged,
   once the cells located below the roof, but not those located below the metal floats, are full of seawater, allowing seawater to enter the cells located below the metal floats, in such a way that the immersion of the assembly is completed, the concrete base resting on the seabed,
   and removing said plurality of metal floats.

The concrete base is made of reinforced concrete. For simplicity, hereinafter it is simply referred to as "concrete". The concrete base can have a height that varies between 7 and 13 metres, such as between 8 and 12 metres, or between 9 and 11 metres, for example about 10 metres.

The metal floats should be as hollow as possible. In fact, they can be considered hollow, since preferably the solid portions are nothing more than those defined by the perimeter wall itself and some inner solid portions are formed by separating partitions, if any, for example an internal partition that can be located at the bottom of the float, which delimits a compartment that houses the elements intended to connect each float with the roof of the concrete base.

Most of the cells are preferably hollow. Some cells can be solidified, at least partially, with concrete, to ensure the embedding of the construction or portion of the construction to be installed.

Preferably at least three floats are used, which must be located at points on the roof of the concrete base, as far from the centre of gravity of the concrete base as possible. When the roof (and lower slab) of the concrete base is triangular or circular, three floats are preferably used. When the roof (and lower slab) of the concrete base is square or rectangular, four floats are preferably used.

When the filling of the cells of the concrete base located below the roof has been completed, but the filling of the cells of the concrete base located below the metal floats still has not started, both the concrete base and the metal floats are submerged. Specifically, the assembly is submerged in such a way that the upper surface of the floats is almost flush with the sea surface, slightly submerged. Thus, for example, given a concrete base of about 10 metres high and at a depth of approximately 12 metres, the cells below the roof of the concrete base are already filled with water, such that this is the highest hydrostatic pressure that the roof of the base must support. This is, therefore, a critical moment.

Shortly after the cells below the floats start to fill, i.e., when these cells are partially filled with water, the concrete base, together with the metal floats, is completely submerged, the concrete base resting on the seabed. Once resting, the cells below the floats continue to fill with water until they are totally full, thus increasing the stability of the assembly.

In embodiments of the invention, the step of allowing seawater to enter the cells of the concrete base located below the roof comprises: first allowing seawater to enter the outer cells, and then allowing seawater to enter the inner cells. This helps, to some extent, the air exit the cells as they fill up. Alternatively, it is possible to start by filling the inner cells with water.

Preferably, the step of towing the assembly formed by the concrete base and the plurality of metal floats to the offshore location where the construction is to operate is carried out with the base and metal floats completely empty of ballast.

In embodiments of the invention, the step of towing the assembly formed by the concrete base and the plurality of metal floats to the offshore location where the construction is to operate further comprises towing the construction, or portion of it, which has been previously installed on the roof of the concrete base. Alternatively, towing is carried out without the construction, which is installed at the final offshore destination. In this case, the construction is preferably installed after the concrete base has been lowered.

Once the assembly is towed to the offshore location where the construction is to operate, the assembly, be it the complete construction, partial construction, or only the concrete base with the connected floats, is positioned at the destination site. To achieve correct positioning, preferably at least three tugboats should be used. In addition, the positioning thereof on the seabed does not require any type of additional means, or special large-capacity auxiliary vessels (heavy lift vessels), or floating elements unrelated to the structure.

In embodiments of the invention, the metal floats are designed so that the following equation is true:

$$\text{Volume of floats} = \text{Total weight of empty structure}/1.025 + \text{Volume of the cells below the roof} - \text{External volume of concrete base}$$

wherein the "Volume of floats" represents the volume occupied by all the floats, i.e., the volume of seawater displaced when they are completely submerged, the "Total weight of empty structure" refers to the weight of the floats, the concrete base and the construction or portion thereof that has been transported, in the case that at least a portion thereof has been transported, but without any ballast (such as water ballast), 1.025 represents the density of seawater, the "Volume of the cells below the roof refers to the volume of the cells that are not below the columns, and the "External volume of concrete base" refers to the volume of water that the concrete base displaces when it is completely submerged.

Preferably, the following equation must also be true:

$$\text{Volume of the cells below the roof} > \text{Total weight of empty structure}/1.025 \times 0.5$$

This is to ensure that there is sufficient naval stability at the critical moment.

In embodiments of the invention, the step of allowing seawater to enter the cells of the concrete base located below the roof, maintaining the cells located below the metal floats empty, is carried out as follows:

by means of a system comprising: a first pipe, access pipe, that connects the outside of the concrete base with a central pipe, or an inner distribution ring, a plurality of distribution pipes communicated with a plurality of groups of outer cells, and perforations located in the vertical walls that separate the cells, filling the outer cells below the roof with water from the central portion inside the concrete base,
then filling the inner cells below the roof with water.

In embodiments of the invention, the step of allowing seawater to enter the outer cells (of the cells below the roof) is carried out as follows:

allowing seawater to enter from outside the concrete base, through an intake and an access pipe that connects the intake with a central pipe,
from the central pipe, distributing the water towards a first plurality of distribution pipes towards a corresponding group of outer cells,
in each group of outer cells, allowing the water to enter between the cells through perforations in the vertical walls that separate adjacent cells,
as the cells in each group of outer cells are filled, emptying the cells of air.

In embodiments of the invention, the step of allowing seawater to enter the inner cells is carried out as follows:

allowing seawater to enter from outside the concrete base, through the intake and the access pipe to the central pipe, from the central pipe, distributing the water towards a second plurality of distribution pipes towards at least one group of inner cells,

in the at least one group of inner cells, allowing the water to enter between the cells through perforations in the vertical walls that separate adjacent cells,

as the cells in each group of outer cells are filled, emptying the cells of air.

In embodiments of the invention, as the cells are filled, the air occupying the cells before filling with water is released through perforations in the walls that separate the cells and through a plurality of air pipes. The perforations in the walls are preferably located at the top of the same.

When the outer and inner cells have been filled, but the cells below the metal floats have not, the critical point of lowering stability has been reached, at which point the metal floats are completely submerged.

In embodiments of the invention, the step of removing the plurality of metal floats is carried out by remote control.

In embodiments of the invention, the step of removing the plurality of metal floats comprises allowing water from the outside to enter inside the metal floats, until the upward thrust is only slightly greater than its own weight, thus better controlling the rate of ascent thereof. The upward thrust is only slightly greater than its own weight when the floats are partially filled with water. Preferably the floats are raised one by one, but more than one can be raised simultaneously. Once on the surface, the floats will be emptied in order to be towed more easily for later use.

In a second aspect of the invention, a method for refloating a construction laid by gravity on the seabed, which has been installed following the previous method, is provided. The refloating method comprises allowing compressed air to enter the inside of the concrete base through a plurality of air pipes. These pipes are preferably the same ones through which the air occupying the cells exited during the anchoring step.

In a third aspect of the invention, a maritime structure for offshore laying a of construction by gravity is provided, comprising:

a concrete base comprising a lower slab or surface, an upper surface or roof and a perimeter wall that delimits the concrete base from the lower slab thereof to the roof thereof, the inside of the concrete base comprising a plurality of vertical walls that form or delimit cells,

a plurality of hollow metal floats configured to connect to and disconnect from the roof of the concrete base, wherein each metal float of said plurality of metal floats is formed by a column with a circular or polygonal base,

wherein the metal floats are designed so that the following equation is true:

$$\text{Volume of floats} = \frac{\text{Total weight of empty structure}}{1.025} + \text{Volume of the cells below the roof} - \text{External volume of concrete base}$$

Preferably, the following equation must also be true:

$$\text{Volume of the cells below the roof} > \frac{\text{Total weight of empty structure}}{1.025} \times 0.5$$

The concrete base can have a height that varies between 7 and 13 metres, such as between 8 and 12 metres, or between 9 and 11 metres, for example about 10 metres.

The floats should be as hollow as possible. In fact, they can be considered hollow, since preferably the solid portions are nothing more than those defined by the perimeter wall itself and some inner solid portions formed by separating partitions, if any, for example an internal partition that separates the elements intended to connect each float with the roof of the concrete base.

Preferably at least three floats are used, which must be located at points on the roof of the concrete base, as far from the centre of gravity of the concrete base as possible.

In some embodiments of the invention, the lower slab and the roof of the concrete base are square or rectangular, in which case the number of metal floats is 4, the floats being located at the corners of the roof.

In some embodiments of the invention, the lower slab and the roof of the concrete base are triangular, preferably shaped like an equilateral triangle with truncated vertices, in which case the number of metal floats is 3, the floats being located at the corners of the roof.

In some embodiments of the invention, the lower slab and the roof of the concrete base are circular, in which case the number of metal floats is at least 3, the floats being located equidistant from each other on the outermost portion of the roof.

In embodiments of the invention, the structure further comprises a water filling system comprising:

at least one access pipe that connects the outside of the concrete base with at least one inner ring distribution pipe, i.e., with the inside of the concrete base,

a first plurality of distribution pipes starting from the at least one inner ring distribution pipe, communicated with a plurality of groups of outer cells, so that, together with perforations located in the vertical walls separating the cells, when using the structure, the outer cells below the roof are filled with water from the central portion of the concrete base (i.e., from the at least one inner ring distribution pipe),

a second plurality of distribution pipes starting from the at least one inner ring distribution pipe and communicating with at least one group of inner cells, the second plurality of distribution pipes being configured to, when using the structure, fill the inner cells below the roof of the concrete base with water from the at least one inner ring distribution pipe,

a third plurality of distribution pipes communicated with at least one group of cells below floats for, when using the structure, filling the cells below floats with water from the at least one inner ring distribution pipe.

In embodiments of the invention, the structure further comprises a plurality of air ducts configured to, during immersion of the structure, remove the air from the cells as they fill with water, and during refloating of the structure, allow compressed air to enter the cells.

Due to the maritime structure for offshore laying by gravity and the method for the installation of the structure and, in general, of a construction arranged on the structure, of the present invention, it is possible to maintain a high metacentric height both during towing and during the different steps of ballasting and anchoring, without the need to use special auxiliary means. In addition, during transport and towing, the structure has a shallow draft, for example no greater than about 10 metres, so very deep docks are not needed to build it.

It is especially worth noting that the proposed structure and the installation method enable it to be anchored at great depths, especially at depths between 30 and 60 metres.

In addition, it is possible to reduce the manufacturing and installation cost, due to the simple geometry of the concrete base, which is easy to build by means of a caisson, sliding formwork or prefabrication. It also stands out for its simple and safe refloating capacity.

Additional advantages and features of the invention will be apparent from the detailed description that follows and will be indicated in particular in the attached claims.

**BRIEF DESCRIPTION OF THE FIGURES**

As a complement to the description, and for the purpose of helping to make the features of the invention more readily understandable, in accordance with a practical exemplary embodiment thereof, said description is accompanied by a set of figures which, by way of illustration and not limitation, represent the following:

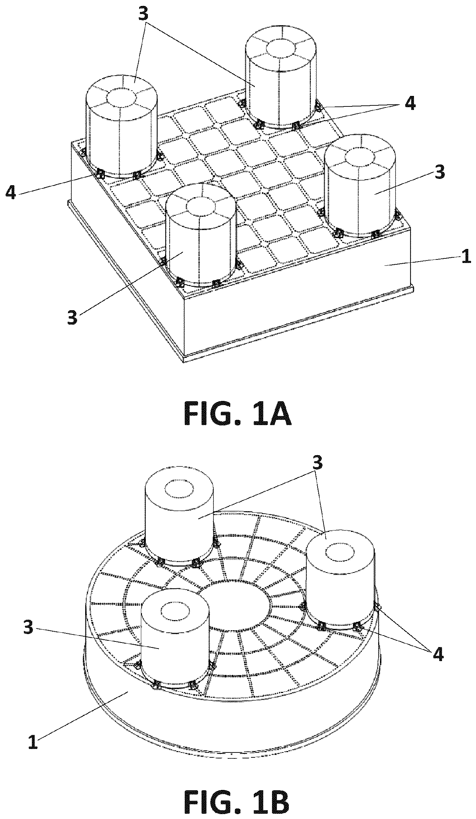

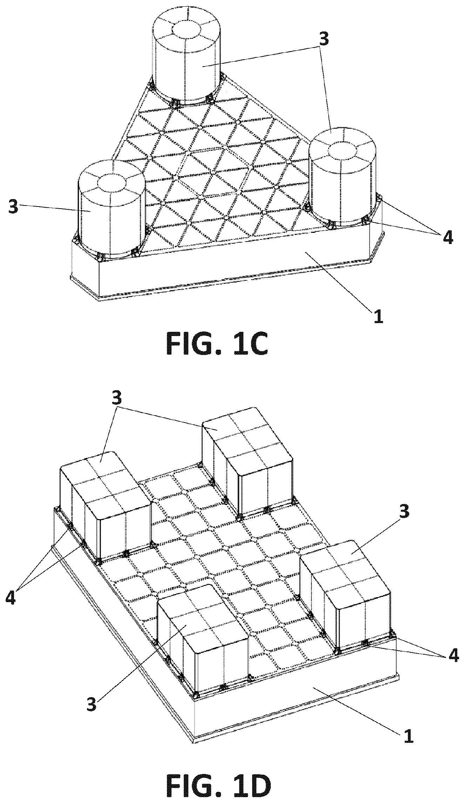

Figure 1A shows a side view of a maritime gravity-based structure formed by a concrete base with a square cross-section and four metal columns, according to a possible embodiment of the invention. Figure 1B shows a side view of a maritime gravity-based structure, formed by a concrete base with a circular cross-section and three metal columns, according to another possible embodiment of the invention. Figure 1C shows a side view of a maritime gravity-based structure, formed by a concrete base with a triangular section and three metal columns, according to another possible embodiment of the invention. Figure 1D shows a side view of a maritime gravity-based structure formed by a concrete base with a rectangular cross-section and four metal columns, according to a possible embodiment of the invention.

Figure 2 shows an exploded view of the structure of Figure 1A, wherein the exposed base can be seen, to show the internal arrangement thereof, the roof thereof and the four metal columns that can be connected to the roof.

Figure 3 shows a plan view of the base of Figure 1A, exposed.

Figure 4 shows a longitudinal section of the base of Figure 1A.

Figure 5 illustrates a detail of a possible method for manufacturing the base of Figure 1A.

Figure 6 illustrates a detail of a possible non-permanent joining of a base and a metal column, according to a possible embodiment of the invention.

Figure 7 shows a plan view of the base of Figure 1A, which highlights the fact that during the method for the installation of the offshore structure, the cells below the roof are completely filled before the cells below the metal columns start to fill.

Figure 8 shows an example of how the installation of a construction on the roof of a structure is completed, according to a possible embodiment of the invention.

Figure 9 shows how the gravity-based structure can be towed to the offshore installation site, according to a possible embodiment of the invention.

Figure 10 shows how the gravity-based structure can be precisely positioned at the offshore installation site, according to a possible embodiment of the invention.

Figures 11A-11B show diagrams of the system for filling the outer cells below the roof of the base of Figure 1A, according to a possible embodiment of the invention. Figures 11C-11D schematically illustrate a possible configuration of the water and air ducts.

Figures 12A-12B show diagrams of the system for filling the inner cells below the roof of the base of Figure 1A, according to a possible embodiment of the invention.

Figures 13A-13B show diagrams of the system for filling the cells of the base, which are below the metal columns arranged on the roof of the base of Figure 1A, according to a possible embodiment of the invention.

## DESCRIPTION OF AN IMPLEMENTATION OF THE INVENTION

The description that follows should not be taken in a limited sense, but is provided solely for the purpose of describing broad principles of the invention. The following embodiments of the invention will be described by way of example, with reference to the figures mentioned above, which show apparatuses and results according to the invention.

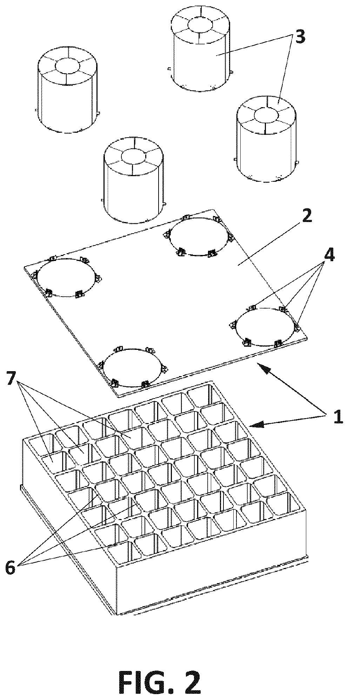

Figures 1A, 1B, 1C and 1D show possible embodiments of a maritime gravity-based structure formed by a concrete base, plinth or caisson 1 and several metal columns 3 that act as floats. As illustrated in Figure 2, which by way of example relates to the structure of Figure 1A, in each case, the concrete base 1 is formed externally by a lower surface or slab 8, an upper surface or slab or roof 2, in the same way as the lower slab, and a wall or perimeter wall 5 that closes the concrete base 1, joining the lower slab to the roof, forming a plinth or caisson. The lower slab 8 and the roof 2 of the concrete base can take any polygonal or circular shape. In Figure 1A, the lower slab and the roof have a square shape, while in Figure 1B they have a circular shape, in Figure 1C they have a triangular shape, specifically an equilateral triangle truncated at the vertices thereof, and in Figure 1D they have a rectangular shape. Other polygonal shapes are also possible. In Figures 1B-1D, the upper slab has been removed to show the internal arrangement of the concrete base.

The lower slab 8 is very thick, for example between 0.50 and 1 metre. The lower slab is responsible for transmitting the loads to the seabed. The thickness of the roof 2 preferably varies between 0.20 and 0.75 metres. The perimeter wall 5 that is arranged vertically between the lower slab 8 and the roof 2 of the concrete base is very resistant, to withstand the energy of the swell and the hydrostatic pressure. The thickness thereof preferably varies between 0.30 and 0.80 metres. Preferably, a concrete base 1 is selected with a height that varies between 7 and 13 metres, such as between 8 and 12 metres, or between 9 and 11 metres, for example about 10 metres. The height has been calculated to optimise the draft, floatability, navigability and lowering thereof. The value thereof must be adjusted to suit the particular conditions of each specific application. At the chosen height, the structure offers very low resistance to swell, this resistance also being reduced since the floats are removed in the operating phase.

Throughout this specification, the metal columns 3 are also referred to as metal floats due to their function as floats. The floats 3 must be located at points on the roof 2 of the concrete base 1, as far from the centre of gravity of the concrete base as possible, for example at the vertices when the concrete base 1 has a polygonal shape. When the roof 2 (and lower slab 8) of the concrete base 1 is triangular or circular, as is the case of Figures 1B and 1C, three floats are preferably used. When the roof 2 (and lower slab 8) of the concrete base 1 is square or rectangular, as is the case of Figures 1A and 1D, four floats are preferably used. As explained later, the metal floats 3 are designed to withstand high hydrostatic pressures and are essential to achieve stability, both during transfer or towing and in all phases of lowering at the final destination. The metal from which each metal column 3 is made can be, without limitation, steel, an aluminium alloy with one or more light metals, or others. Steel is preferably used. It is also possible to coat each metal column 3 with a plastic sleeve, for example made of polyethylene. The plastic sleeve can be filled with a material, such as polystyrene foam. This coating can increase the displacement volume.

The metal columns 3 are rigidly connected, usually at port, to the roof 2 of the concrete base 1 by means of connection means 4 located on the roof, which enable the connection and disconnection thereof. The columns 3 connected or able to be connected to the concrete base 1 are preferably equal to each other. The cross-section thereof can be circular (i.e., a cylindrical column) or polygonal (i.e., the column is shaped like a prism with a polygonal base), since they are designed to withstand significant hydrostatic pressures. For example, the columns of the concrete bases of Figures 1A-1C are cylindrical, while those of Figure 1D have a parallelepiped shape. The metal floats (columns) 3 must be as hollow as possible. The solid portions thereof are nothing more than those defined by the perimeter wall itself and optionally by separating partitions, for example an internal partition that can be located at the bottom of the float, which delimits a compartment that houses the elements intended to connect each float with the roof of the concrete base. By way of example, the columns 3 shown in Figures 1A and 1C are made up of two large concentric metal tubular structures joined by metal walls arranged radially, and two metal closing lids at the ends thereof. The radial walls, which can be made lighter, for example by means of hollow areas (areas without metal), transmit part of the pressure to the inner core and stiffen the structure, enabling the thickness of the outer metal sheets of the float to be reduced. In turn, in Figure 1B, the columns are made up of the same two tubular structures, but without radial partitions, which is why they require an outer tube that is thicker or reinforced by a series of horizontal rings welded on the inner face thereof which act as stiffening frames. Lastly, the parallelepipedic columns of Figure 1D are made up of a metal caisson, stiffened therein by walls, which may or may not be made lighter, and which constitute a grid that enables resisting the pressures to which it will be subjected.

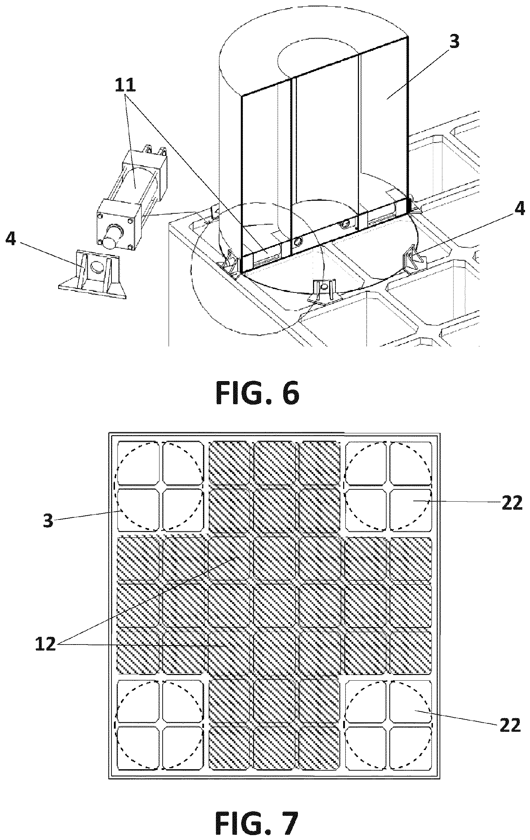

Preferably at the bottom thereof, each column 3 has a watertight compartment that houses the active connection and disconnection mechanisms 11, able to be connected to the connection means 4 of the roof 2. Figure 6 shows a possible form of non-permanent joining of a column or float 3 and a concrete base 1 (the roof of the concrete base is not illustrated). The connection and disconnection mechanisms 11 can be wirelessly actuated from an operations control centre, or activated by ROVs (remote operated vehicles). These mechanisms 11 can be several bolts, for example made of steel, that move horizontally to enter or exit the connection means 4 (for example connectors) arranged on the roof 2. By way of example, the mechanisms 11 can be hydraulic cylinders, as shown in Figure 6, or any other semi-automatic or even manual system.

Figure 2 shows an exploded view of the structure of Figure 1A, wherein the exposed concrete base is shown, i.e., the roof 2 has been separated from the rest of the concrete base 1, to illustrate the internal arrangement of the concrete base 1. The four metal columns 3 able to be connected to the roof 2 are also shown, as well as possible connection points 4 between the roof 2 and the columns 3. As can be seen, the inside of the concrete base 1 comprises a plurality of vertical walls 6, in this case arranged perpendicular to the four walls that define the perimeter 5 of the concrete base between the lower slab 8 and the roof 2. These vertical walls 6 form hollow cells 7. The inside of the concrete bases 1 illustrated in Figures 1B-1D is similar, i.e., it is formed by vertical walls that define hollow cells. Some cells can be solidified, at least partially, with concrete, to facilitate the embedding of the construction or portion of the construction to be installed. In case of solidification, the cells that enable joining with the construction are chosen for this purpose. For example, in the case of a jacket, the cells that are below the legs of the same.

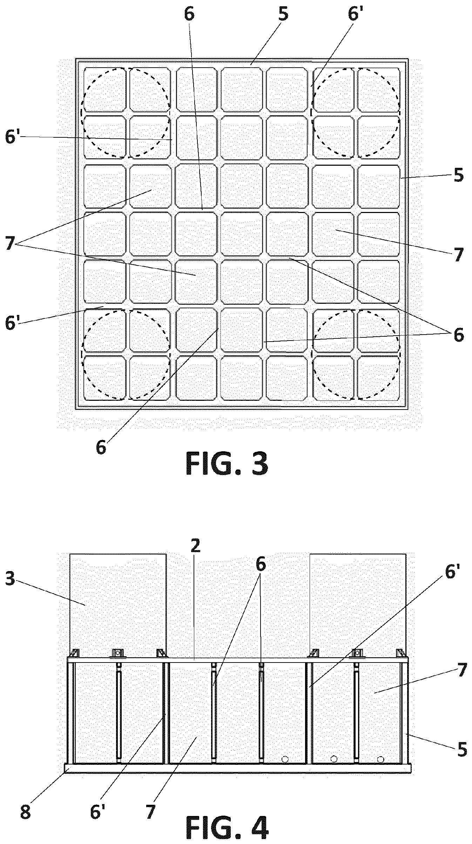

Figure 3 shows a plan view of the concrete base 1 of Figure 1A, exposed (the roof 2 has been removed). In this case, since the vertical walls 6 are located perpendicular to the four walls, or perimeter wall 5, that define the height of the concrete base 1, the cells 7 that are defined are cube-shaped, i.e., have a square cross-section. On the other hand, the vertical walls 6 can be arranged in a way that is not perpendicular to the wall or walls that define the height of the concrete base 1. This can often occur in concrete bases 1 with a circular or triangular roof or, in general, a polygonal shape other than a square or rectangle. In this case, the cells defined by the vertical walls can have a triangular, hexagonal, or other polygonal cross section. In short, the framework of vertical walls 6 forms multiple cells that have a square, rectangular, triangular, hexagonal or another polygonal cross section, depending on the shape of the concrete base 1 and, more specifically, of the perimeter wall 5 thereof. Figure 4 shows a longitudinal section of the base of Figure 1A.

The concrete base 1 forms a very robust and monolithic structure in order to withstand the significant actions that it will be subjected to in the marine environment. It can be built by concreting "in situ" at least the lower slab 8 and the perimeter walls 5. The lower slab 8 and the perimeter walls 5 can be built without joints of any type. If necessary, the inner walls 6 can be prefabricated.

Among the vertical walls 6, those that delimit and/or form the cells arranged below the floats 3 are reinforced walls 6', as shown in Figures 3 and 4. In other words, the reinforced walls 6' separate the inner volume of the concrete base 1 that is below the floats 3 from the volume of the same that is not. These reinforced walls 6' can also be concreted "in situ", together with the lower slab 8 and the perimeter wall 5. The thickness thereof preferably varies between 0.25 and 0.75 metres.

The rest of the walls 6 are usually thinner, such as between 0.15 and 0.35 metres. Some walls 6, 6' may have perforations both at the bottom thereof and at the top, arranged for filling and emptying the cells they form with seawater. In addition, the cells and walls that define them can be passed through by pipes intended to enable water to enter during the lowering of the structure. This is explained later with regards to the method for lowering and refloating the structure.

The number of cells 7 defined inside the concrete base 1 depends on the size thereof, and is selected to adequately support the superstructure (base, floats and construction) that it will support. By way of example, the separation between consecutive vertical walls 6, 6' can vary between 4 and 8 m, such as between 5 and 7 metres, depending on the installation depth, among other aspects. Furthermore, the concrete base 1 may have an alteration in the regular mesh of cells 7 forming the walls 6, 6', to constitute a rigid joint with the upper construction.

Since the height of the concrete base 1 has been chosen to be between 7 and 13 metres, such as between 8 and 12 metres, or between 9 and 11 metres, for example about 10 metres, the concrete base 1 can be constructed using a "caisson" (standard system for manufacturing caissons for wharfs and dykes), if the dimensions can be adapted to the use thereof, or on the contrary, it can be carried out with both conventional formwork and climbing or sliding formwork, on a wharf, floating dyke or dry dyke. It can be carried out through an industrial process based on production and assembly lines, with processes being carried out simultaneously in different manufacturing areas (prefabs, formworks, concreting, floating, assembly of elements, mounting of floats, superstructures, etc.). This system enables lead times to be shortened and production to be increased at lower cost.

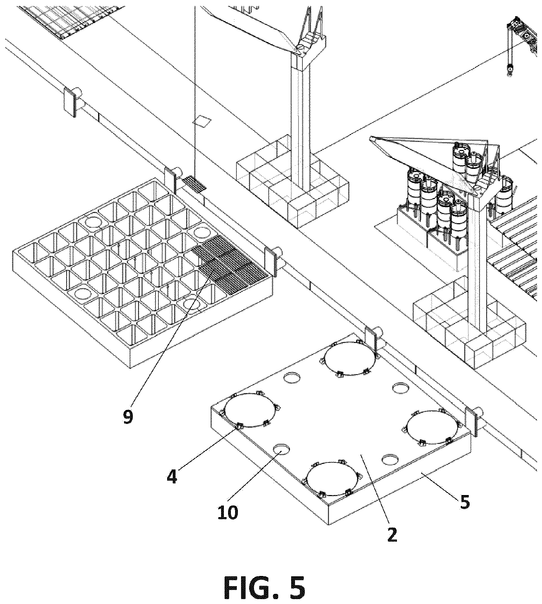

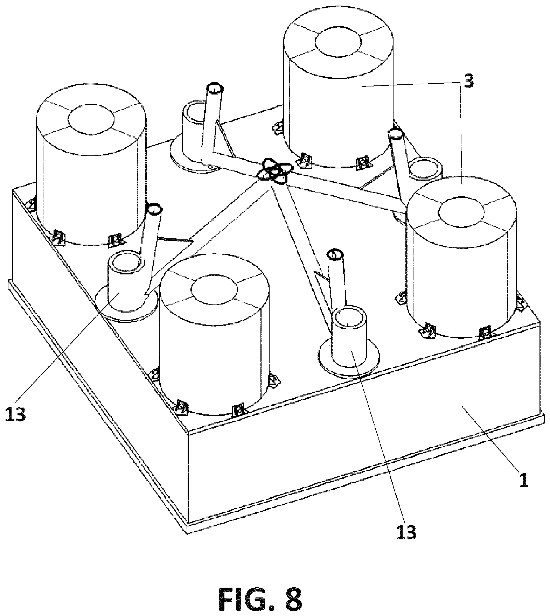

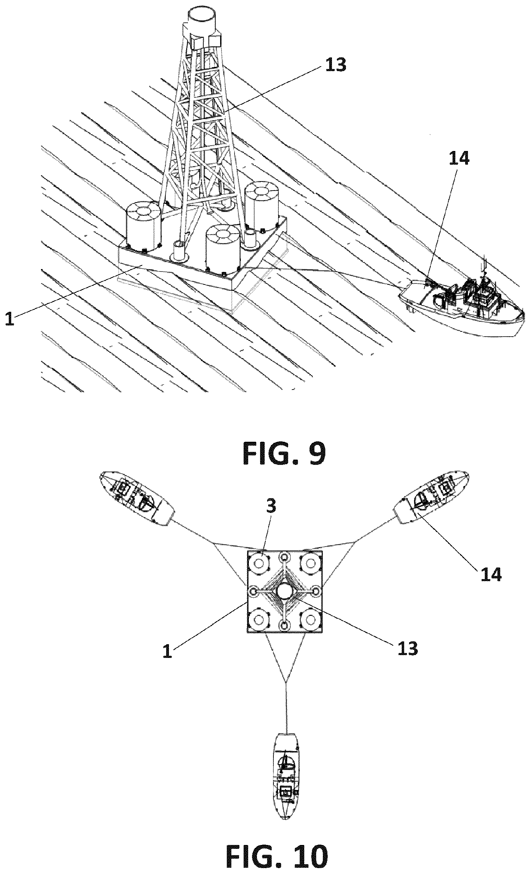

The roof 2 can be formed by a series of concrete pre-slabs 9, as illustrated in Figure 5. In Figure 5, which shows a possible method for manufacturing a concrete base like the one in Figure 1A next to a wharf, the exposed base (lower slab 8, perimeter wall 5 and vertical walls 6, 6') has been put afloat next to the wharf. This assembly is covered with concrete pre-slabs 9, so that the pre-slabs form, for example, half of the roof 2. The rest of the slab is subsequently concreted, achieving an assembly of great robustness and monolithism. In other words, the rest of the roof 2 is made by pouring concrete over the pre-slabs, to join them and make them resistant. During this subsequent concreting, which gives rise to the final roof 2, if necessary for embedding the construction to be installed on the concrete base 1, holes 10 can be made in the appropriate place for each case, through which it is possible to establish the required connection with the elements of the construction. For example, in Figure 8 a portion of the installation, construction or element for obtaining energy, embedded in the concrete base 1, is shown schematically. Figure 9 shows the complete construction. This construction must be firmly joined to the concrete base 1 so that all the stresses to which the assembly is subjected are transmitted directly to the seabed. For this reason, the concrete base 1 may have an alteration in its configuration, to adapt it to the features of the construction to be installed. The connectors 4 that join the floats 3 with the concrete base 1 are located on the roof 2, on, at the height of, the reinforced inner walls 6', thus transmitting all the traction exerted by the float 3 to the reinforcement thereof.

In Figure 7, which is similar to Figure 3 and represents a plan view of a possible implementation of concrete base 1 of Figure 1A, the cells 12 below the roof 2, but not below the columns 3, in turn stand out from the cells 22 below the columns 3. The columns or floats 3 are designed to withstand high hydrostatic pressures, since they must provide great stability, both during transfer or towing and in all phases of lowering at the final destination. Once connected to the roof of the concrete base 1, the floats 3 integrally follow the concrete base 1, so that if said base is submerged, the floats 3 are also submerged with it. The floats or columns 3 are hollow, being made up of either a single outer wall with stiffening frames or of a framework of inner walls, for example concentric walls, which enable withstanding external pressures. This second possibility is represented in Figure 6. In any case, the possible inner walls define hollow space. Furthermore, each column 3 houses the aforementioned connection and disconnection mechanisms 11 in a watertight space. The floats 3 can also have a system of valves that enable water from the outside to enter in order to, in due course, facilitate the uncoupling of the concrete base 1, for the subsequent reuse of the floats 3.

The volume of the columns or floats 3, and therefore the height and diameter thereof, must be chosen in a way that provides great safety in the transport, lowering and refloating of offshore structures at great depths, such as at depths of up to 60 metres, such as between 30 and 60 metres, or between 40 and 60 metres, or between 50 and 60 metres. Furthermore, for a given naval stability, the lower the height of the columns 3, the less expensive the structure and the lower the centre of gravity, which in turn implies a smaller concrete base 1 for the same result. Thus, once the plan section (and therefore diameter) of the floats 3 has been defined, in order to adapt to the construction 13 to be lowered as well as possible, the height thereof is obtained from the following equation which establishes the volume for the optimal performance thereof:

$$\text{Volume of floats} = \frac{\text{Total weight of empty structure}}{1.025} + \text{Volume of the cells below the roof} - \text{External volume of concrete base}$$

wherein the "Volume of floats" represents the volume occupied by all the floats (for example, four in Figure 1A and three in Figures 1B and 1C), i.e., the volume of seawater displaced when the floats are completely submerged, the "Total weight of empty structure" refers to the weight of the floats 3, the concrete base 1 and the construction 13 or a transported portion thereof, in the case that at least a portion of the construction 13 is transported, but without any water ballast, 1.025 represents the density of seawater, the "Volume of cells below the roof refers to the volume of the cells 12 that are not below the columns 3, and the "External volume of concrete base" refers to the volume of water that the concrete base 1 displaces when it is completely submerged.

Preferably, the following equation must also be true:

$$\text{Volume of the cells below the roof} > \frac{\text{Total weight of empty structure}}{1.025} \times 0.5$$

These two conditions minimise the volume of the floats, providing the following properties to the assembly: (1) The maximum pressure to which the roof of the concrete base 1 is subjected is equal to that of a water column at the height of the floats 3. (2) Lowering and refloating can be carried out without any type of auxiliary means, since it is ensured that at the critical moment, which is when the columns 3 are completely submerged, the centre of flotation is at least half a metre above the centre of gravity of the assembly, as required by the corresponding regulations on naval stability. In other words, the above conditions guarantee compliance with the regulations.

The method for the offshore installation of a construction laid by gravity on the seabed is described below. Due to the features of the structure (concrete base and floats) and of the method of installation, the assembly can be installed at great depths, such as at depths of up to 60 metres, such as between 30 and 60 metres, or between 40 and 60 metres, or between 50 and 60 metres. The aim of the entire method is for operations to be carried out in a reliable and safe manner, ensuring the stability of the structure at all times, minimising risks, increasing the windows of operability and doing all of this at a very low cost.

First, starting from a concrete base 1 such as the one described throughout this specification, i.e., delimited by a lower slab 8, a roof 2 and a perimeter wall 5, and the inside of which includes a plurality of vertical walls 6, 6' forming cells 7, a plurality of metal floats 3 such as those described throughout this specification are connected at the periphery of the roof 8. In other words, each metal float 3 is formed by a column with a circular or polygonal base and is substantially hollow (i.e., except with regard to the thickness of the perimeter wall thereof, which provides resistance to hydrostatic pressure, and to elements necessary for installation and lowering, such as connection mechanisms 11 and/or valves which can facilitate the refloating step). When the concrete base 1 has a polygonal cross section, the floats 3 are placed at vertices of the roof, preferably one float per vertex. When the concrete base 1 has a circular cross section, the floats 3 are placed at points on the perimeter thereof, i.e., as far from the centre as possible, preferably equidistant from each other.

The assembly formed by the concrete base 1 and the plurality of metal floats 3 is towed to the offshore location where the construction 13 is to operate. The structure can be transferred to the location where it operates by means of conventional, high-availability tugboats 14, as illustrated for example in Figure 9. As for the construction 13, it can be moved either completely installed, partially installed, or not moved at all. Choosing where to install the construction depends on the type of construction and the size of the concrete base that is to be made. In the particular case that the partially installed construction is moved, the concrete base, the floats and a portion of the construction are installed at port, and later the rest of the construction is installed at the offshore destination. This case is illustrated, for example, in Figures 9 and 10, wherein the concrete base and floats are towed with a jacket installed on the roof. This jacket is the bottom portion of a wind turbine. The rest of the wind turbine (shaft, nacelle and blades) is subsequently installed at the offshore destination.

In this step of transferring the structure, the concrete base 1 is preferably completely empty, so that naval stability is excellent and the freeboard thereof is high. Moreover, the floats 3 joined to the concrete base 1 provide very broad stability at high heel, a circumstance that is crucial to minimise risks and increase windows of operability.

Once at the offshore installation site, if necessary, the structure can be placed in its final position, for example by tugboats. By way of example, Figure 10 shows a structure that is positioned by three tugboats which are arranged approximately 120 degrees from each other, to thus correct any deviation from the exact location. This process does not require any type of additional means, or special large-capacity auxiliary vessels (heavy lift vessels), or floating elements unrelated to the structure. Normally, a vessel is used from which the control operations of the lowering process are carried out, such as valve opening, cell level checks, etc. An inspection ROV can also be used, and is sometimes helpful, to secure underwater manoeuvres.

Next, to begin lowering itself, seawater is allowed to enter the cells 12 of the concrete base located below the roof 2 of the concrete base 1, maintaining the cells 22 located below the metal floats 3 unfilled (empty), in such a way that when the cells 12 located below the roof are totally full, both the concrete base 1 and the metal floats 3 are submerged.

In other words, the assembly is submerged approximately at the height of the top of the floats 3, these floats being submerged just below the sea surface.

Once the cells 12 located below the roof 2, but not those located below the metal floats 3, are full of seawater, seawater is allowed to enter the cells 22 located below the metal floats 3, in such a way that the immersion of the assembly is completed, the concrete base 1 resting on the seabed. In fact, the concrete base 1 rests on the seabed shortly after the cells 22 located below the floats begin to fill, cells which are completely filled once the concrete base 1 has rested on the seabed in order to make the assembly more stable. The cell filling process is carried out by means of a set of pipes, such as: access pipe from the outside to the inside, inner ring pipe and preferably radial pipes that distribute the water to groups of cells from the inner ring pipe; and auxiliary elements such as access valves, pumping systems and perforations for the passage of water.

Finally, the metal floats 3 are removed. In Figure 7, the shaded cells 12 indicate that they have already been filled with seawater, while the unshaded cells 22 indicate that they are still empty. The lowering steps are explained in detail below. The inlet of water can be controlled from an lowering manoeuvre control station.

As for the inlet of seawater into the cells 12 of the concrete base located below the roof 2 of the concrete base 1, maintaining the cells 22 located below the metal floats 3 unfilled (empty), this step can be divided into two phases: First, allowing seawater to enter the outer cells of the assembly of cells 12 below the roof 2; and secondly, allowing water to enter the inner cells of said assembly of cells 12. Filling the cells 12 in the aforementioned order can facilitate the outlet of air contained in the empty cells 12 as they are filled. Alternatively, the cells can be filled in another order.

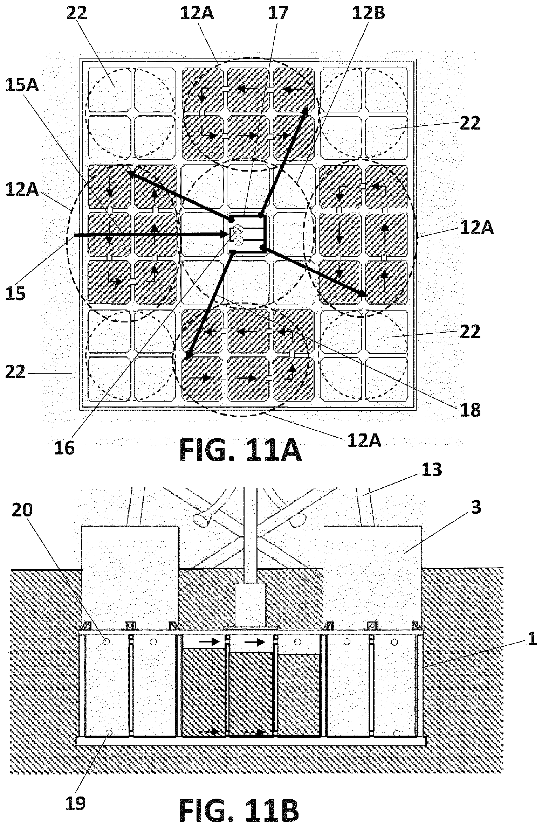

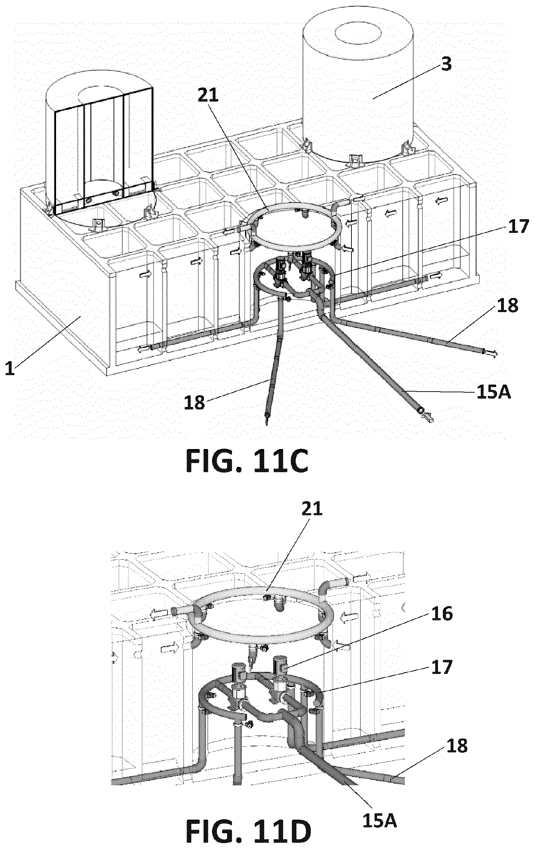

One possible way of allowing water to enter the outer cells below the roof is illustrated in Figures 11A and 11B. For water to enter, the concrete base 1, and specifically for example the cells, vertical walls separating the cells and lower slab thereof, have a series of elements. Through a water intake 15 located in the perimeter wall 5 and a pipe 15A that connects the intake 15 with an inner distribution pipe 17, preferably located in a central cell, the water from the outside is made to reach the central pipe (internal distribution pipe) 17. The central pipe 17 is ring-shaped, having either a circular or polygonal shape, and can be semi-open (at least at the point of connection with the pipe 15A). The water intake 15 is preferably located at the bottom of the perimeter wall 5. The intake 15 can have the necessary filters so that particles or elements that may damage the installation do not enter. Preferably in the central portion of the concrete base 1, for example in the cell in which the pipe 17 is located, there is also a plurality of pumping means 16 which enable water to be driven towards the different cells. Therefore, the ring-shaped pipe 17 distributes the flow of water through a plurality of distribution pipes 18, such as radial pipes, which start from different points, branches, of the inner pipe 17 towards the outer cells of the cells 12 below the roof. Figures 11C and 11D show details of the pipes 15A, 17, 18 and the pumping means 16.

Once the water reaches the outer cells 12A of the cells 12 below the roof, also through perforations 19 located in the vertical walls separating the cells, preferably at the bottom thereof, the water passes from some cells to others, so that the outer cells below the roof are filled with water from the distribution pipes 18. In the case illustrated in Figure 11A, each distribution pipe 18 distributes water to a group of outer cells 12A of cells 12 below the roof. To do so, in each branch of the inner distribution ring 17 towards the radial pipes 18, a valve is installed, such as a remote control valve, to direct the water from the ring pipe 17 towards the outer cells 12A. Preferably, the distribution pipes 18 either go along the bottom of the concrete base 1, passing through the cells that are in their path, or are embedded in the lower slab 8. Finally, perforations 20 preferably located at the top of the vertical walls enable the air to exit as the cells are filled with water. In the last cell of each group (in Figure 11B the arrows indicate a possible order for filling with water), another pipe is arranged, preferably at the top thereof, such as a radial pipe, which leads to another inner pipe ring 21 similar to the water inlet ring 17, which enables the air to exit to the outside. This air duct 21, illustrated in Figures 11C and 11D, also enables, during the refloating step, compressed air from the outside to enter in order to empty the cells in a controlled manner.

Although two rows of cells in each group of cells 12A are shown in Figure 11A, each group of cells 12A may have a different number of rows of cells. Preferably there are no more than three rows of cells in each group, to reduce the instability caused by the water-free surfaces. In sectors or groups of cells 12A with a large number of cells, such as between 3 and 9 cells, a zigzag circuit can be made through them. In each group of cells 12A, the water is allowed to enter the cell furthest from the circuit so that the air can exit from some cells to others through the perforations 20, preferably through the top thereof, until it reaches the inner pipe 21.

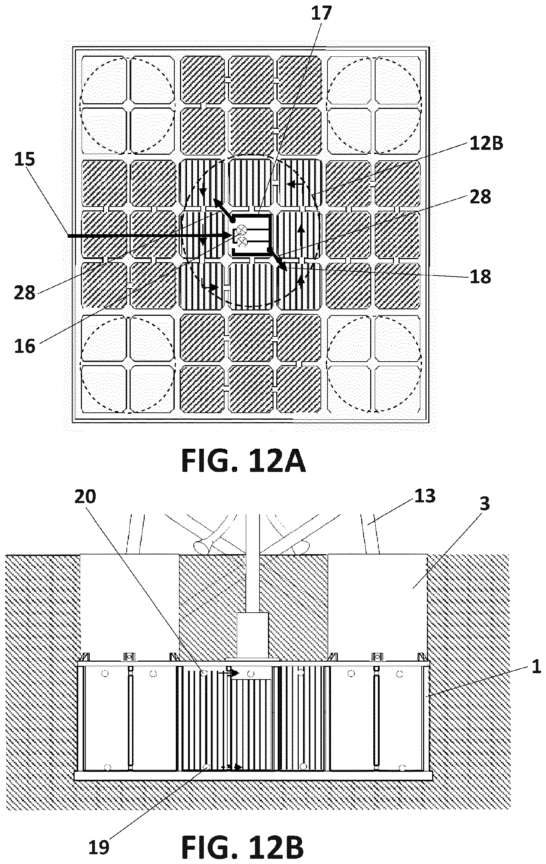

When the cells of the groups of outer cells 12A are full, the groups of cells corresponding to the central area 12B are filled, as illustrated in Figures 12A and 12B, for example following the path indicated by the arrows in Figure 12A. As for filling the outer cells 12A below the roof, from the central ring pipe 17 the flow of water is distributed through a plurality of distribution pipes 28 that start from different points, branches, of the central pipe 17, in this case towards the inner cells 12B below the roof. In the case illustrated in Figure 12A, there are two distribution pipes 28 that distribute water to cells of the group of inner cells 12B. To do so, in each branch of the ring 17 towards the pipes 28, a valve is installed, such as a remote control valve, to direct the water from the ring pipe 17 towards the cells 12B. Preferably, the distribution pipes 28 either go along the bottom of the concrete base 1, passing through the cells that are in their path, or are embedded in the lower slab 8. As shown in Figure 12B, in the group of cells 12B, perforations 19 preferably located at the bottom of the vertical walls forming the cells enable water to pass from some cells of the group to other cells of the group. Finally, perforations 20 preferably located at the top of the vertical walls enable the air to exit as the cells are filled with water. In other words, the air is extracted through the top of the last cell in each series, which is also connected to the air extraction ring 21 described above, so that the whole process can be reversed. In one or more cells of the group, another pipe is arranged, preferably at the top thereof, which leads to the aforementioned pipe ring 21, similar to the water inlet ring 17, which enables the air to exit to the outside. This air duct also enables, during the refloating step, compressed air from the outside to enter in order to empty the cells in a controlled manner. As the cells are filled, the metacentric height increases from between 0.5 and 1.5 metres to between 2 and 4 metres.

When the entire central area 12B is filled, the critical point of lowering stability is reached, since at this time the floats 3 are completely submerged and the inertia of the floating surface decreases drastically, leaving the stability highly compromised. For this reason, conventional concrete caissons or bases, for example those with only 10 m of upright height, usually require some auxiliary means to stabilise them. On the contrary, the following occurs in the concrete base 1 of the present invention, mainly due to the design of volumes proposed for calculating the floats 3: (1) The centre of flotation of the submerged surface is more than half a metre above the centre of gravity of the entire assembly once the cells below the roof have been filled, as explained below. This entails the recovery of the stability that enables lowering to be continued with absolute safety. From this moment on, this distance increases even further. (2) At the critical moment of lowering stability, there are no free surfaces since there are no cells that are half-filled. This entails a great optimisation of resources to achieve maximum stability with minimal structure. (3) All the cells 12 that are below the roof 2 of the concrete base 1 are completely filled with water, so that by having to withstand much less pressure, significant cost-effectiveness of the structure for laying at great depths is achieved.

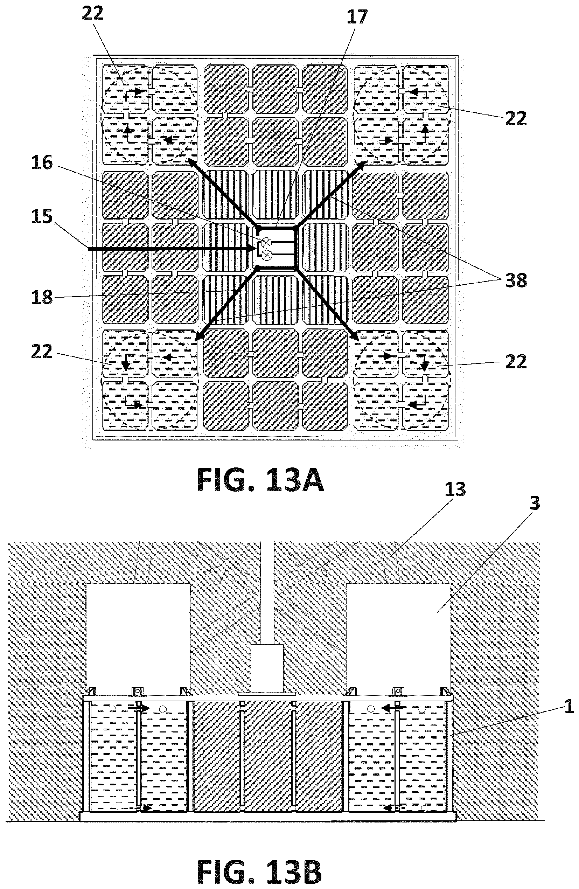

Seawater is then allowed to enter the cells 22 located below the floats 3, as shown for example in Figures 13A and 13B. As for filling the outer cells below the roof, from the central ring pipe 17, or from another similar ring pipe, the water flow is distributed through a plurality of distribution pipes 38, such as radial ones, which start from different points, branches, of the pipe, in this case towards the cells 22 below the floats. In the case illustrated in Figure 13A, each distribution pipe 38 distributes water to a group of cells 22. To do this, in each branch of the ring towards the pipes 38, a valve is installed, such as a remote control valve, to direct the water from the ring pipe towards the cells 22. Preferably, the distribution pipes 38 either go along the bottom of the concrete base 1, passing through the cells that are in their path, or are embedded in the lower slab 8. As shown in Figure 13B, in each group of cells 22, perforations 19 preferably located at the bottom of the vertical walls forming the cells enable water to pass from some cells of the group to other cells of the group. Finally, as in the previous cases, perforations 20 preferably located at the top of the vertical walls enable the air to exit as the cells fill with water, so that the air is extracted through the last cell in each series, which is also connected to the air extraction ring 21 described above, so that the whole process can be reversed. In the last cell of each group (in Figure 13A the arrows indicate a possible order for filling with water), another pipe is arranged, preferably at the top thereof, which leads to the pipe ring 21 for the air to exit to the outside, previously described.

As the cells 22 are filled, the concrete base 1 descends until the immersion of the assembly is completed, leaving the concrete base 1 resting on the seabed. When this occurs, the cells 22 below the floats 3 still have not been totally filled. These cells 22 are completely filled once the concrete base 1 rests on the seabed. It is worth noting that no water (or ballast, in general) has entered the floats 3, which are empty when they reach the seabed.

Once the concrete base 1 is completely filled with water, the structure is already perfectly stabilised on the seabed and the floats 3 can be removed to be reused with another structure. The decoupling can be carried out from the control centre, remotely actuating the connection and disconnection mechanisms 11. It can also be done by actuating the ROV, which serves to monitor the process. To facilitate the disconnection process, the floats 3 can have their own system of valves, which enable water from the outside to enter in order to reduce the vertical thrust of the float and thus better control the rise thereof.

The structure described in this specification has the additional advantage that it enables simple and safe refloating if necessary. The refloating method of the structure, and in general of the construction supported by it, laid by gravity on the seabed by following the method described, is carried out by allowing compressed air from the outside to enter inside the concrete base, through a plurality of air pipes. Preferably, the same pipes that were used during lowering are used to release the air from the cells as they are filled with water. In other words, refloating involves carrying out the reverse process to lowering, but instead of pumping water, compressed air is allowed to enter, for example from an outside vessel, preferably using the same ducts through which the air exited during lowering. This system has two important advantages: the first is that it significantly reduces the number of pipes to be installed in the concrete base; and the second is that the pumps used in the conventional refloating method can break down and stop working over time, such that the proposed method simplifies and ensures the success of the refloating process.

By way of example, and without limitation, a possible configuration of the structure of the invention is the following: The concrete base is made with a "caisson", so the maximum beam of the concrete base must be less than 32 m, which is the maximum allowed by the "caisson" method. With this starting dimension, it is possible to carry a load of 850 tonnes with a centre of gravity located 26 metres from the roof, which corresponds, for example, to approximately the weight of a 60-metre jacket structure. The possible dimensions are:

- Dimensions of the concrete base: 32 x 32 x 10 m
- Dimensions of the cells: 4.50 x 4.50 m
- Thickness of outer walls (perimeter wall): 0.50 m
- Thickness of inner walls: 0.25 m
- Thickness of reinforced walls: 0.50 m
- Thickness of the lower slab: 0.80 m
- Width of the heel of the lower slab: 0.30 m
- Thickness of the upper slab (roof): 0.40 m
- Weight of the caisson (concrete base): 7,930 t
- Number of floats: 4
- Diameter of the floats: 8.90 m
- Height of the floats: 12.65 m
- Total weight of the floats: 380 t
- Volume of cells below the roof: 4,470 $m^3$
- Occupation of the seabed: 1,063 $m^2$

The maritime structure to be installed (construction, installation or element for obtaining energy 13) on the concrete base must be firmly joined to the caisson (concrete base) so that all the stresses to which the assembly is subjected are transmitted directly to the seabed. For this reason, the caisson may have an alteration in its configuration and therefore produce a change in the previously indicated values, which are not usually significant, but which should be reviewed.

The proposed structure, and the method for the offshore installation thereof, has major advantages over other conventional installation structures and methods:

(1) It is the only towing, lowering and refloating system that, without requiring special auxiliary means, has a shallow draft and can be built next to wharfs only about 10 metres deep, which notably increases the availability of manufacturing points close to the site of implementation. This feature is very important because it lowers the cost of the process and increases the possibilities of simultaneous supply for large implementations.

(2) To install it, the structure is towed to the position where it is to operate, presenting great naval stability due to the high initial metacentric height and the perimeter floats that provide excellent stability at high heel, notably improving safety in adverse conditions.

(3) The lowering can be carried out at great depths, up to 60 m with the same concrete base structure, since the maximum pressure during the critical moment has been envisaged in the design thereof, which is why it is a very cost-effective type of foundation at these great depths.

(4) It is a foundation system that does not make noises that affect mammals and other marine animals and that can be carried out on practically all types of seabeds. For this reason, it is a very suitable system for laying jackets or monopiles since it eliminates the significant drawbacks thereof.

(5) The lowering process of the structure is done by means of ballasting of the cells thereof exclusively with seawater, without the need for any additional means, special large-capacity auxiliary vessels, or floating elements unrelated to the structure since, due to the design thereof, it complies with the requirements during all of the phases of the lowering process.

(6) The structure offers very low resistance to swell since it is only about 7-13 metres high and the floats are removed in the operation phase.

(7) For the dismantling thereof, it can be refloated and integrally transferred to the port without the need for auxiliary means to disassemble it.

(8) On the other hand, when the floats are submerged, the cells located below the roof are already completely ballasted with water. This means that the maximum hydrostatic pressure exerted on the walls and slabs of the base is that which corresponds to this depth. This feature enables the thicknesses of these walls dimensioned for this pressure to be maintained, regardless of the depth at which they rest on the seabed.

(9) The large support surface enables it to support the largest wind turbines (8 Mw, 10 Mw or higher). The configuration of the foundation and the lack of a solid ballast is favourable to low pressures on the seabed, in spite of the large total weight thereof, and this solves many of the geotechnical problems that other foundations must solve.

(10) By avoiding the need to use special vessels, which are rare on the market, and auxiliary means for towing and lowering, the manoeuvring times are reduced and the calendar for executing the available windows of good weather can be adjusted, thereby entirely optimising the execution process.

(11) It is a reinforced concrete structure, with a simple geometry made up only of vertical and horizontal walls (upper and lower slabs) that are not inclined, which allows the knowledge and experience of the technology for the execution of port caissons, which are widely developed, to be used in the constructive system thereof, thereby allowing these types of structures to be simplified, optimised and less expensive.

(12) The concrete provides a better behaviour against impacts than metal structures. Given the cyclical character of the loads to which these types or constructions are subjected (swell and wind), it also has significant advantages with respect to resistance to fatigue. All of this, along with the improved durability thereof in a saline medium, implies a useful life far superior to the majority of the existing structures.

(13) The long useful life of the structure, which can exceed 50 years, and the large capacity for absorbing large forces, could enable the substitution of the wind turbine at 20-25 years (approximately the useful life thereof) by another which has greater power. This re-powering can be done safely at the port, due to the efficient refloatation system thereof, and thus provide an efficiency that is far greater than the cost of the foundation.

As has become apparent throughout the present specification, the structure and method for the installation and refloating of the present disclosure provide several differentiating factors with respect to conventional structures and methods of the installation and refloating of maritime gravity-based structures.

In this specification, the term "comprises" and its derivations (such as "comprising", etc.) should not be understood in an excluding sense, in other words, these terms should not be interpreted as excluding the possibility that what is described and defined may include additional elements, steps, etc.

In the context of the present invention, the term "approximately" and related terms (such as "approximate", etc.) should be interpreted as indicating values very close to those that accompany said term. In other words, a deviation within reasonable limits from an exact value should be accepted, because a person skilled in the art will understand that such a deviation from the indicated values may be unavoidable due to measurement inaccuracies, etc. The same applies to the terms "some", "about" and "substantially".

The invention is obviously not limited to the specific embodiment(s) described, but also encompasses any variation that may be considered by any person skilled in the art (for example, in relation to the choice of materials, dimensions, components, configuration, etc.), within the general scope of the invention as defined in the claims.

**Claims**

1. A method for the offshore installation of a construction laid by gravity on the seabed, comprising:

   providing a concrete base (1) delimited by a lower slab (8), a roof (2) and a perimeter wall (5), wherein the interior of the concrete base (1) comprises a plurality of vertical walls (6, 6') forming cells (7, 12, 22),
   connecting at the periphery of the roof (2) of said concrete base (1) a plurality of hollow metal floats (3), wherein each metal float of said plurality of metal floats (3) is formed by a column with a circular or polygonal base,
   towing the assembly formed by the concrete base (1) and the plurality of metal floats (3) to the offshore location where it is to operate,
   allowing seawater to enter the cells (12, 12A, 12B) located below the roof (2), maintaining the cells (22) located below the metal floats (3) empty, in such a way that when the cells (12, 12A, 12B) located below the roof (2) are totally full, both the concrete base (1) and the metal floats (3) are submerged,
   once the cells (12, 12A, 12B) located below the roof (2), but not those located below the metal floats (3), are full of seawater, allowing seawater to enter the cells (22) located below the metal floats (3), in such a way that the immersion of the assembly is completed, the concrete base (1) resting on the seabed,
   removing said plurality of metal floats (3).

2. The method of claim 1, wherein the step of allowing seawater to enter the cells (12, 12A, 12B) of the concrete base (1), which are located below the roof (2), comprises:

   first allowing seawater to enter the outer cells (12A), and
   then allowing seawater to enter the inner cells (12B).

3. The method of claim 2, wherein the step of allowing seawater to enter the outer cells (12A) is carried out as follows:

   allowing seawater to enter from outside the concrete base (1), through an intake (15) and an access pipe (15A) that connects the intake (15) with a central pipe (17),
   from the central pipe (17), distributing the water towards a first plurality of distribution pipes (18) towards a corresponding group of outer cells (12A),
in each group of outer cells (12A), allowing the water to enter between the cells through perforations (19) in the vertical walls that separate adjacent cells,
as the cells in each group of outer cells (12A) are filled, emptying the cells of air.

4. The method of claim 3, wherein the step of allowing seawater to enter the inner cells (12B) is carried out as follows:

allowing seawater to enter from outside the concrete base (1), through the intake (15) and the access pipe (15A) to the central pipe (17),
from the central pipe (17), distributing the water towards a second plurality of distribution pipes (28) towards at least one group of inner cells (12B),
in the at least one group of inner cells (12B), allowing the water to enter between the cells through perforations (19) in the vertical walls that separate adjacent cells,
as the cells in each group of inner cells (12B) are filled, emptying the cells of air.

5. The method of any one of the preceding claims, wherein the step of allowing seawater to enter the cells (22) located below the metal floats (3) is carried out as follows:

allowing seawater to enter from outside the concrete base (1), through an intake (15) and an access pipe (15A) that connects the intake (15) with a central pipe (17),
from the central pipe (17), distributing the water towards a third plurality of distribution pipes (38) towards a corresponding group of cells below floats (22),
in each group of cells below floats (22), allowing the water to enter between the cells through perforations (19) in the vertical walls that separate adjacent cells,
as the cells in each group of cells (22) are filled, emptying the cells of air.

6. The method of any one of the preceding claims, wherein the step of towing the assembly formed by the concrete base (1) and the plurality of metal floats (3) to the offshore location where the construction is to operate is carried out with the concrete base (1) and metal floats (3) completely empty of ballast.

7. The method of any one of the preceding claims, wherein the step of towing the assembly formed by the concrete base (1) and the plurality of metal floats (3) to the offshore location where the construction is to operate further comprises towing the construction (13) or a portion thereof, which has been previously installed on the concrete base (1).

8. The method of any one of the preceding claims, wherein the metal floats (3) are designed so that they fulfil the following equation:

$$\text{Volume of floats} = \frac{\text{Total weight of empty structure}}{1.025} + \text{Volume of the cells below the roof} - \text{External volume of concrete base}$$

wherein the "Volume of floats" represents the volume occupied by all the floats (3), i.e., the volume of seawater displaced when the floats are completely submerged, the "Total weight of empty structure" refers to the weight of the floats (3), the concrete base (1) and the construction (13) or portion thereof that has been transported, in the case that at least a portion thereof has been transported, but without any water ballast, 1.025 represents the density of seawater, the "Volume of the cells below the roof refers to the volume of the cells (12) that are not below the floats (3), and the "External volume of concrete base" refers to the volume of water that the concrete base (1) displaces when it is completely submerged.

9. The method of claim 8, wherein the metal floats (3) are designed so that the volume of each one also fulfils the following equation:

$$\text{Volume of the cells below the roof} > \frac{\text{Total weight of empty structure}}{1.025} \times 0.5$$

10. The method of any one of the preceding claims, wherein as the cells are filled with water, the air occupying the cells before filling with water is released through perforations (20) in the walls (6, 6') that separate the cells and through air pipes (21).

11. The method of any one of the preceding claims, wherein when the outer and inner cells below the roof have been filled, but the cells below the metal floats have not, the critical point of lowering stability has been reached, at which point the metal floats (3) are completely submerged.

12. The method of any one of the preceding claims, wherein the step of removing said plurality of metal floats (3) is carried out by remote control.

13. The method of any one of the preceding claims, wherein the step of removing said plurality of metal floats (3) comprises allowing water from the outside to enter inside the metal floats (3) to reduce the vertical thrust of the floats (3) and thus better control the rise thereof (3).

14. A method of re-floating a construction laid by gravity on the seabed, which has been installed by following the method of any one of claims 1-13, comprising:
allowing compressed air from the outside to enter inside the concrete base (1) through air pipes (21).

15. A maritime structure for offshore laying of a construction by gravity, comprising:

a concrete base (1) comprising a lower slab (8), an upper roof (2) and a perimeter wall (5) that delimits the concrete base (1) from the lower slab (8) thereof to the upper roof (2) thereof, the inside of the concrete base (1) comprising a plurality of vertical walls (6, 6') that form or delimit cells (7, 12, 22),
a plurality of hollow metal floats (3) configured to connect to and disconnect from the roof (2), wherein each metal float of said plurality of metal floats (3) is formed by a column with a circular or polygonal base,
wherein the metal floats (3) are designed so that the volume of each one fulfils the following equation:

$$\text{Volume of floats} = \frac{\text{Total weight of empty structure}}{1.025} + \text{Volume of the cells below the roof} - \text{External volume of concrete base}$$

wherein the "Volume of floats" represents the volume occupied by all the floats (3), i.e., the volume of seawater displaced when the floats are completely submerged, the "Total weight of empty structure" refers to the weight of the floats (3), the concrete base (1) and the construction (13) or portion thereof that has been transported, in the case that at least a portion thereof has been transported, but without any water ballast, 1.025 represents the density of seawater, the "Volume of the cells below the roof refers to the volume of the cells (12) that are not below the floats (3), and the "External volume of concrete base" refers to the volume of water that the concrete base (1) displaces when it is completely submerged.

16. The structure of claim 15, wherein the metal floats (3) are designed so that the volume of each one also fulfils the following equation:

$$\text{Volume of the cells below the roof} > \frac{\text{Total weight of empty structure/}}{1.025} \text{ X } 0.5.$$

17. The structure of any one of claims 15-16, wherein the lower slab (8) and the upper roof (2) of the concrete base (1) are square or rectangular, in which case the number of metal floats (3) is 4, the floats being located at the corners of the roof (2).

18. The structure of any one of claims 15-16, wherein the lower slab (8) and the upper roof (2) of the concrete base (1) are triangular, in which case the number of metal floats (3) is 3, the floats being located at the corners of the roof (2).

19. The structure of any one of claims 15-16, wherein the lower slab (8) and the upper roof (2) of the concrete base (1) are circular, in which case the number of metal floats (3) is at least 3, the floats being located equidistant from each other in the outermost portion of the roof (2).

20. The structure of any one of claims 15-19, further comprising a water filling system comprising:

at least one access pipe (15A) that connects the outside of the concrete base (1) with the inside of the concrete base (1),
at least one inner pipe (17) connected to said at least one access pipe (15A), from which the following start:

a first plurality of distribution pipes (18) communicated with a plurality of groups of outer cells (12A) for, when using the structure, filling the outer cells (12A) below the roof (2) with water from the at least one inner pipe (17),
a second plurality of distribution pipes (28) communicated with at least one group of inner cells (12B) for, when using the structure, filling the inner cells (12B) below the roof (2) with water from the at least one inner pipe (17),
a third plurality of distribution pipes (38) communicated with at least one group of cells below floats (22) for, when using the structure, filling the cells below floats (22) with water from the at least one inner pipe (17).

21. The structure of any one of claims 15-20, further comprising a plurality of air pipes (21) configured to, during the immersion of the structure, remove the air from the cells as they fill with water and, during the refloating of the structure, allow compressed air to enter the cells.

3

3

4

4

3

1

3

3

**FIG. 1A**

3

3

3

4

1

**FIG. 1B**

**FIG. 1C**

**FIG. 1D**

EP 3 943 666 A1

**FIG. 2**

20

FIG. 5

FIG. 6

FIG. 7

FIG. 8

**FIG. 9**

**FIG. 10**

EP 3 943 666 A1

FIG. 11A

FIG. 11B

26

**FIG. 11C**

**FIG. 11D**

17

15

12B

28

18

28

16

## FIG. 12A

20

13

3

1

19

## FIG. 12B

**FIG. 13A**

**FIG. 13B**

# INTERNATIONAL SEARCH REPORT

| | International application No. |
|---|---|
| | PCT/ES2019/070175 |

## A. CLASSIFICATION OF SUBJECT MATTER

See extra sheet

According to International Patent Classification (IPC) or to both national classification and IPC

## B. FIELDS SEARCHED

Minimum documentation searched (classification system followed by classification symbols)
E02D

Documentation searched other than minimum documentation to the extent that such documents are included in the fields searched

Electronic data base consulted during the international search (name of data base and, where practicable, search terms used)

EPODOC, INVENES

## C. DOCUMENTS CONSIDERED TO BE RELEVANT

| Category* | Citation of document, with indication, where appropriate, of the relevant passages | Relevant to claim No. |
|---|---|---|
| X | ES 2378960 A1 (INNEO TORRES SL ET AL.) 19/04/2012, column 4, line 56 - column 7, line 57; column 9, lines 44 - 56; column 10, line 67 - column 12, line 25; column 13, lines 9 - 15; figures 3, 4, 9, 10. | 1-21 |
| A | US 3793842 A (LACROIX R) 26/02/1974, column 1, lines 26 - 30; column 2, line 5 – column 3, line 13; figures 1 - 2. | 1-21 |
| A | US 2004169376 A1 (RUER JACQUES ET AL.) 02/09/2004, paragraphs [0055], [0064]- [0071]; figures 1- 2. | 1-21 |

☒ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 22/11/2019 | **(27/11/2019)** |
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>R. Puertas Castaños<br><br><br>Telephone No. 91 3498509 |

Form PCT/ISA/210 (second sheet) (January 2015)

**EP 3 943 666 A1**

## INTERNATIONAL SEARCH REPORT

| International application No. |
| --- |
| PCT/ES2019/070175 |

C (continuation). DOCUMENTS CONSIDERED TO BE RELEVANT

| Category * | Citation of documents, with indication, where appropriate, of the relevant passages | Relevant to claim No. |
| --- | --- | --- |
| A | FR 2449029 A1 (DORIS DEV RICHESSE SOUS MARINE) 12/09/1980, page 3, lines 19 - 24; page 5, lines 17 - 28; page 6, lines 11 - 15; figures 11, 14 | 1-21 |
| A | WO 2016156624 A1 (DRACE INFRAESTRUCTURAS S A ET AL.) 06/10/2016, abstract; page 6, lines 4 - 8; page 7, line 34; figures. | 1-21 |
| A | FR 2887900 A1 (DORIS ENGINEERING) 05/01/2007, abstract; figures. | 1-21 |

Form PCT/ISA/210 (continuation of second sheet) (January 2015)

## INTERNATIONAL SEARCH REPORT

| International application No. |
| --- |
| PCT/ES2019/070175 |

CLASSIFICATION OF SUBJECT MATTER

*E02D27/06* (2006.01)
*E02D23/02* (2006.01)
*E02D23/08* (2006.01)

## INTERNATIONAL SEARCH REPORT

Information on patent family members

International application No.

PCT/ES2019/070175

| Patent document cited in the search report | Publication date | Patent family member(s) | Publication date |
|---|---|---|---|
| US3793842 A | 26.02.1974 | OA3970 A | 31.08.1979 |
| | | NO136803B B | 01.08.1977 |
| | | NO136803C C | 07.12.1977 |
| | | NL7202896 A | 07.09.1972 |
| | | IT949833 B | 11.06.1973 |
| | | GB1354258 A | 05.06.1974 |
| | | FR2127401 A5 | 13.10.1972 |
| | | CA951924 A | 30.07.1974 |
| | | AR207310 A1 | 30.09.1976 |
| FR2887900 A1 | 05.01.2007 | NONE | |
| US2004169376 A1 | 02.09.2004 | WO03004870 A1 | 16.01.2003 |
| | | FR2827015 A1 | 10.01.2003 |
| | | FR2827015 B1 | 23.12.2005 |
| | | EP1404969 A1 | 07.04.2004 |
| FR2449029 A1 | 12.09.1980 | NONE | |
| ES2378960 A1 | 19.04.2012 | BR112013006859 A2 | 24.09.2019 |
| | | | 21.08.2019 |
| | | TR201910769T T4 | 19.09.2013 |
| | | US2013243531 A1 | 13.02.2018 |
| | | US9890510 B2 | 30.08.2013 |
| | | EA201390407 A1 | 31.03.2017 |
| | | EA026167 B1 | 31.07.2013 |
| | | CN103228909 A | 29.06.2016 |
| | | CN103228909B B | 29.03.2012 |
| | | CA2811853 A1 | 31.07.2013 |
| | | EP2619445 A1 | 22.05.2019 |
| | | EP2619445 B1 | 29.03.2012 |
| | | WO2012038487 A1 | |
| WO2016156624 A1 | 06.10.2016 | | 03.05.2018 |
| | | US2018119675 A1 | 15.10.2019 |
| | | US10443574 B2 | 06.10.2016 |
| | | CA2980959 A1 | 31.01.2018 |
| | | EP3276086 A1 | 20.02.2019 |
| | | EP3276086 A4 | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016042173 A1
- WO 2018150063 A1
- ES 2378960 A1
- FR 2887900 A1